# EUROPÄISCHE PATENTSCHRIFT

(11) **EP 2 851 757 B1**
(45) Veröffentlichungstag und Bekanntmachung des Hinweises auf die Patenterteilung: **04.03.2020**
(21) Anmeldenummer: 14185001.6
(22) Anmeldetag: 16.09.2014
(51) Int. Cl.: G05B 19/042, G01F 23/00

(54) **Kundenspezifische Konfiguration und Parametrierung von Füllstandmessgeräten beim Bestellvorgang**
Customer-specific configuration and parametrisation of fill level measuring devices in an ordering procedure
Configuration spécifique au client et paramétrage d'appareils de mesure de niveau de remplissage

(30) Priorität: 20.09.2013 DE 102013218971
(43) Veröffentlichungstag der Anmeldung: 25.03.2015
(73) Patentinhaber: VEGA Grieshaber KG, 77709 Wolfach (DE)
(72) Erfinder: Schätzle, Ralf, 77716 Fischerbach (DE); Faist, Fridolin, 77709 Oberwolfach (DE)
(74) Vertreter: Maiwald Patent- und Rechtsanwaltsgesellschaft mbH

(56) Entgegenhaltungen:
- DE-A1-102010 038 458
- DE-A1-102011 079 756
- DE-A1-102011 079 890
- DE-A1-102011 080 569

## Beschreibung

Die Erfindung betrifft die Füllstandsmessung. Insbesondere betrifft die Erfindung ein Füllstandmessgeräteparametriersystem für die Konfiguration und/oder Parametrierung eines Füllstandmessgeräts. Weiterhin betrifft die Erfindung ein Verfahren zur Erzeugung einer Konfigurationsinformation und/oder Parametrierinformation eines Füllstandmessgeräts, ein Programmelement und ein computerlesbares Medium.

### Hintergrund der Erfindung

Zur kontinuierlichen Füllstandsbestimmung in Behältern, die beispielsweise Flüssigkeiten oder Schüttgüter enthalten können, werden oftmals Sensoren verwendet, die in vielfältigen Ausführungsformen erhältlich sind und jeweils je nach Einsatzsituation zusätzlich verschiedene Einstellungen und Parameter aufweisen können. Diese Vielzahl an Konfigurations- und Parametriermöglichkeiten können in vielen Fällen einen erhöhten Aufwand hinsichtlich einer Inbetriebnahme erforderlich machen. Moderne Füllstandmessgeräte können oft eine Vielzahl von unterschiedlichen Parametern, Abhängigkeiten und Einstellmöglichkeiten aufweisen. Insbesondere bei der Verwendung einer größeren Zahl von Füllstandmessgeräten, beispielsweise in Produktionsumgebungen mit einer Vielzahl von Behältern, kann eine effiziente Inbetriebnahme und Wartung der Füllstandmessgeräte wichtig sein.

Die DE 10 2011 079 890 A1 betrifft ein System zur Bedienung von Feldgeräten in einer Automatisierungsanlage.

### Zusammenfassung der Erfindung

Es kann als eine Aufgabe der Erfindung angesehen werden, ein Parametrieren und/oder Konfigurieren eines Füllstandmessgeräts zu verbessern. Diese Aufgabe wird durch die Merkmale der unabhängigen Patentansprüche gelöst. Weiterbildungen der Erfindung ergeben sich aus den Unteransprüchen und der folgenden Beschreibung.

Es wird ein Füllstandmessgeräteparametriersystem, das konfiguriert ist, während und direkt nach dem Bestellen eines Füllstandmessgerätes verwendet zu werden, zur Konfiguration und/oder Parametrierung eines Füllstandmessgeräts vorgeschlagen, das einen Benutzerrechner mit einer Benutzerschnittstelle und einen Zentralrechner aufweist. Zwischen dem Zentralrechner und dem Benutzerrechner besteht eine Datenkommunikationsverbindung. Der Benutzerrechner ist konfiguriert, auf Basis von Benutzereingaben über die Benutzerschnittstelle Konfigurationsanweisungen und Parametrieranweisungen zu erzeugen und an den Zentralrechner zu übermitteln. Der Zentralrechner ist konfiguriert, dem Benutzerrechner Steuerinformationen zum Bereitstellen der Benutzerschnittstelle zu übermitteln und basierend auf den Konfigurationsanweisungen und Parametrieranweisungen zumindest einen Teil einer Konfigurationsinformation und/oder Parametrierinformation für ein Füllstandmessgerät zu erzeugen.

Ein Vorteil kann darin gesehen werden, dass durch die Erzeugung der Konfigurationsinformation und der Parametrierinformation an einer zentralen Rechnerinstanz ein Installations- und Wartungsaufwand bei der Bereitstellung des Konfigurations- und Parametriersystems beim Benutzer verringert werden kann. Ein weiterer Vorteil kann darin gesehen werden, dass sich der Benutzer nicht notwendigerweise am Füllstandmessgerät oder in dessen Nähe befinden muss, was eine Flexibilität des Benutzers bei der Konfiguration und Parametrierung von Füllstandmessgeräten erhöhen kann.

Beispielsweise können der Benutzerrechner und der Zentralrechner in einer Client-Server-Architektur zusammenwirken. In einem Beispiel befindet sich der Zentralrechner in einem Rechenzentrum und der Benutzerrechner kommuniziert mittels einer lokal auf dem Benutzerrechner installierten Software über ein Datennetz mit dem Zentralrechner. In einem weiteren Beispiel befindet sich der Zentralrechner im Rechenzentrum und der Benutzerrechner greift mithilfe einer Kommunikationsanwendung auf Funktionen des Zentralrechners im Rechenzentrum zurück. Als Betriebssystem kann beispielsweise auf der Benutzerseite ein Windowsbasiertes System in Frage kommen.

Unter einer Konfiguration oder Assemblierung wird eine bestimmte Anordnung von Baugruppen oder Hardware-Komponenten verstanden, welche während oder nach der Bestellung des Gerätes erfolgt, wobei die Komponenten oder Baugruppen in ihrer Gesamtheit das Füllstandmessgerät bilden. Die jeweiligen technischen Bestandteile und Komponenten bzw. Baugruppen oder Bauteile können hierbei in einem Auslieferungszustand bereits bestimmte Softwarekomponenten enthalten und/oder eine Ausgangsparametrierung aufweisen.

In Abgrenzung zur Konfiguration kann unter einer Parametrierung das Setzen und Verwalten bestimmter veränderbarer Einstellwerte oder Variablen verstanden werden. Diese Parameter können in vielen Fällen vom spezifischen Einsatzgebiet oder Einsatzzweck abhängen und beispielsweise die zur Bestimmung eines Füllstands notwendigen Variablen, wie Behältergröße oder Art des Füllstoffes, festlegen.

Unter einem Benutzerrechner kann eine Datenverarbeitungseinheit verstanden werden, die der Benutzer im Rahmen einer Füllstandmessgeräteverwaltung mobil oder stationär nutzen kann. Hierbei kann es sich um handelsübliche stationäre oder tragbare PCs mit entsprechenden Benutzerschnittstellen, wie Tastatur, Maus oder Ähnlichem, handeln. Ebenfalls möglich ist eine zusätzliche Software, die die entsprechenden Eingabeinteraktionen anstatt eines menschlichen Benutzers ausführen können. In einem Beispiel ist ein Benutzerrechner ein tragbarer Laptopcomputer mit einer Eingabemöglichkeit über Maus und Tastatur.

Unter einem Zentralrechner kann beispielsweise ein in einem Rechenzentrum befindlicher Server verstanden werden, der alle notwendigen, für die Bereitstellung der Systemfunktionen notwendigen Komponenten, wie beispielsweise Speicher und Prozessor, bereithält.

Unter einer Datenkommunikationsverbindung kann beispielsweise eine Internet-Protokoll-Verbindung über das öffentliche Internet verstanden werden. Ebenfalls möglich sind Punkt-zu-Punkt-Verbindungen oder Datenverbindungen über separate, private Datennetze, die Daten unter Umständen auch verschlüsselt übertragen.

Unter Konfigurations- und Parametrieranweisungen können beispielsweise in einem bestimmten definierten Format übertragene Informationen verstanden werden, die der Benutzerrechner aufgrund der Eingaben und Auswahlentscheidungen des Benutzers erzeugt und über die Datenkommunikationsverbindung an den Zentralrechner übermittelt. Diese Informationen können vom Zentralrechner hinsichtlich der vom Benutzer getroffenen Konfigurations- oder Parametrierungsentscheidungen zur Erstellung der Konfigurationsinformation und/oder Parametrierinformation verwendet werden.

Die Steuerinformationen, die der Zentralrechner zur Bereitstellung der Benutzerschnittstelle übermittelt, enthalten beispielsweise Anweisungen zur Erstellung einer grafischen Benutzeroberfläche auf einem Anzeigegerät des Benutzerrechners. Beispielsweise können dies HTML-basierte Informationen sein, aber auch beispielsweise Java oder ähnliche Skript- oder Programmiersprachen. Der Benutzerrechner ist jedenfalls so konfiguriert, dass ein Aufwand zur Installation und ein Aufwand zum Bereithalten von intelligenten Programmfunktionen auf dem lokalen Benutzerrechner möglichst gering gehalten werden kann. Dies kann einen Wartungsaufwand sowie Kosten der Bereitstellung des Benutzerrechners verringern.

Der Zentralrechner ist konfiguriert, beispielsweise eine Konfigurationsdatei für ein bestimmtes Füllstandmessgerät zu erzeugen, die zumindest einen Teil aus der Gesamtheit aller möglichen Konfigurationsmöglichkeiten oder Parametereinstellungen erzeugt. Beispielsweise kann in manchen Fällen die Festlegung einiger ausgewählter Parameter ausreichen, um eine Grundfunktion für die Füllstandsmessung zu ermöglichen.

In einer Ausführungsform der Erfindung ist der Zentralrechner konfiguriert, basierend auf den Konfigurationsanweisungen und Parametrieranweisungen eine vollständige Konfigurationsinformation und/oder Parametrierinformation des Füllstandmessgeräts zu erzeugen.

Ein Vorteil der Erzeugung einer vollständigen Konfigurationsinformation kann darin gesehen werden, dass keine weitere zusätzliche Konfiguration oder Parametrierung, beispielsweise bei Einbau des Füllstandmessgeräts an seinem endgültigen Einsatzort, erforderlich sein muss. Beispielsweise kann bereits bei einem Bestellvorgang des Füllstandmessgeräts, insbesondere im Rahmen einer Bestellanwendung, ein vollständiger Satz an Konfigurationsinformationen und/oder Parametrierinformationen erzeugt werden und diese gegebenenfalls bereits vor Auslieferung des Füllstandmessgeräts in das Füllstandmessgerät übertragen werden. Mit anderen Worten kann hierdurch Zeit und Aufwand einer Inbetriebnahme verringert werden, da eine zusätzliche Parametrierung und/oder Konfiguration vor Ort entfallen kann.

In einer Ausführungsform der Erfindung sind der Zentralrechner und der Benutzerrechner weiterhin konfiguriert, die Konfigurationsinformation und/oder Parametrierinformation mithilfe von Funktionalitäten einer Füllstandmessgeräteverwaltung zu erzeugen.

Unter einer Füllstandmessgeräteverwaltung kann hier eine Anwendung oder eine Software verstanden werden, die beispielsweise eine Benutzerschnittstelle zum Erfassen von Einstellungen bereithält, die es erlaubt, durch Benutzereingaben alle Parameter eines Geräts zu bestimmen und beispielsweise zusätzlich als entsprechende Datei (sogenannte Instanzdaten) zu speichern. Derartige Anwendungen sind auch unter dem Namen "Device Type Manager" bekannt, die beispielsweise als modulare Anwendung in übergeordneten Rahmenapplikationen eingebettet sein können. Diese Rahmenapplikationen sind auch unter dem Begriff Field Device Tool (FDT) bekannt. Beispielsweise sind derartige FDT-Rahmenapplikationen unter den Namen PACTware, Fieldcare, Freelance oder Fieldmate bekannt.

Mit anderen Worten kann ein Vorteil der Nutzung von Funktionalitäten einer Füllstandmessgeräteverwaltung darin gesehen werden, dass eine bereits existierende Softwarekomponente zum Zwecke der Gerätekonfiguration und Geräteverwaltung auch im Rahmen von Drittapplikationen verwendet werden kann. Beispielsweise kann eine Bestellsoftware, durch den Benutzer initiiert, beispielsweise einen Device Type Manager aus der Bestellsoftware heraus aufrufen. Hierdurch kann ein Kunde mit der ihm vertrauten gleichen Benutzeroberfläche des Device Type Managers alle Einstellungen für das bestellte Gerät nach seinen Wünschen tätigen und die erzeugte Konfiguration und Parametrierung bereits im Rahmen des Bestellvorgangs generieren.

Ein weiterer Vorteil kann darin gesehen werden, dass bei Änderungen, die beispielsweise aufgrund von neuen Funktionalitäten des Füllstandmessgeräts hinzukommen, keine separaten oder zusätzlichen Änderungen in den Rahmenapplikationen, insbesondere der Bestellsoftware, implementiert werden müssen. Dies kann einen Wartungsaufwand und somit Kosten bei der Bereitstellung der Parametrier- und Konfigurationsfunktionalitäten bei den Rahmenapplikationen senken.

In einer Ausführungsform der Erfindung ist die Benutzerschnittstelle des Benutzerrechners ausgestaltet, einem Benutzer alle zur Erzeugung der vollständigen Konfigurationsinformation und/oder Parametrierinformation notwendigen Funktionen der Füllstandmessgeräteverwaltung zur Verfügung zu stellen. Mit anderen Worten bietet die Benutzerschnittstelle dem Benutzer im Wesentlichen alle bereits in der Füllstandmessgeräteverwaltung (beispielsweise in einem Device Type Manager) vorhandenen Funktionen, die dem Benutzer bereits vertraut sein können. Dabei kann in einem Beispiel eine Anwendung zur Füllstandmessgeräteverwaltung als zentralisierte Instanz beispielsweise in einem Rechenzentrum auf demselben oder einem weiteren Zentralrechner implementiert sein, so dass die Füllstandmessgeräteverwaltung an nur einer zentralen Stelle bereitgehalten wird und Drittanwendungen auf diese zentralisierte Instanz zurückgreifen können. Dies kann den Vorteil haben, dass anstatt mehrerer verteilter installierter Füllstandmessgeräteverwaltungen lediglich eine zentralisierte Instanz für alle Drittapplikationen bereitgestellt wird. Möglicherweise notwendige Aktualisierungen oder Änderungen in der Funktionalität der Füllstandmessgeräteverwaltung stehen somit sofort allen beteiligten Rahmenapplikationen, beispielsweise auch der Bestellsoftware, zur Verfügung. Dies kann einen Aufwand zur Wartung und Aktualisierung und somit der Kosten deutlich senken.

In einer Ausführungsform der Erfindung entspricht die Ausgestaltung der Benutzerschnittstelle des Benutzerrechners im Wesentlichen der Ausgestaltung einer Benutzerschnittstelle der Füllstandmessgeräteverwaltung. Diese Ausgestaltung kann beispielsweise eine Gestaltung einer grafischen Benutzeroberfläche auf dem Anzeigegerät des Benutzerrechners sein oder auch Bedienanweisungen oder Bedienkommandos, wie Mausbewegungen, Tastaturkürzel oder Ähnliches. Mit anderen Worten wird dem Benutzer eine Benutzerschnittstelle bereitgestellt, die im Wesentlichen dem vertrauten Erscheinungsbild und den Funktionalitäten der Füllstandmessgeräteverwaltung (z. B. Device Type Manager) entspricht. Dies kann den Vorteil haben, dass sich ein Benutzer, beispielsweise während des Bestellvorgangs, nicht mit neuen oder anderen Funktionalitäten oder Bedienoberflächen konfrontiert sieht, sondern auf eine ihm vertraute Benutzerschnittstelle zurückgreifen kann. Dies kann den Vorteil haben, dass zeitliche Abläufe, wie beispielsweise ein Bestellvorgang, vereinfacht und verkürzt werden können.

Gemäß einer Ausführungsform der Erfindung sind der Benutzerrechner und der Zentralrechner konfiguriert, die Benutzerschnittstelle am Benutzerrechner betriebssystemunabhängig bereitzustellen. Ein Vorteil einer betriebssystemunabhängigen Benutzerschnittstelle kann insbesondere ein geringerer Installations- und Wartungsaufwand am Benutzerrechner und die Möglichkeit der Verwendung verschiedenartiger Betriebssysteme am Benutzerrechner sein. Solche Betriebssysteme können beispielsweise Microsoft Windows, Linux, MacOS oder vergleichbare Betriebssysteme einschließlich Tablet-Betriebssysteme wie beispielsweise Android oder IOS sein.

Unter einer betriebssystemunabhängigen Bereitstellung kann eine Verwendung von bereits vorinstallierten und in ihrer technischen Ausgestaltung standardisierten Applikationen verstanden werden. Dies können beispielsweise Programme für den Fernzugriff (z.B. Remote Access oder Terminalanwendungen) sein, aber auch HTML-basierte Anwendungen wie ein Standard-Webbrowser sein.

Gemäß einer Ausführungsform der Erfindung ist das Füllstandmessgeräteparametriersystem auf dem Benutzerrechner und auf dem Zentralrechner als Webapplikation ausgeführt. Hierbei kann der Zentralrechner einen Webserver und eine Webanwendung aufweisen, die über die Datenkommunikationsverbindung mit dem Benutzerrechner kommunizieren. Alle wesentlichen Funktionalitäten der Füllstandmessgeräteverwaltung sind dabei beispielsweise in der Webanwendung auf dem Zentralrechner implementiert und der Webserver dient als kommunikatives Bindeglied zwischen Benutzerrechner und Webanwendung. Mit anderen Worten sind alle wesentlichen intelligenten Funktionalitäten zentralisiert im Zentralrechner als Webanwendung bzw. als Webserver implementiert.

Auf dem Benutzerrechner kann beispielsweise ein betriebssystemseitig vorinstallierter Webbrowser als Benutzerschnittstelle dienen, die durch die Steuerinformationen vom Webserver gesteuert wird. Dies kann beispielsweise durch HTML-, XML- und/oder Java-basierte Protokolle geschehen. Webapplikationen können als betriebssystemunabhängige Variante der Implementierung einen Installations- und Wartungsaufwand auf Seiten des Benutzerrechners vereinfachen und somit eine lokale auf dem Benutzerrechner installierte separate Anwendungssoftware überflüssig machen.

In einer Ausfiihrungsform der Erfindung weist das Füllstandmessgeräteparametriersystem weiterhin eine Speichereinheit auf, die konfiguriert ist, eine vom Zentralrechner erzeugte Konfigurationsinformation und/oder Parametrierinformation zu speichern. Durch die Möglichkeit der Speicherung kann eine bereits erzeugte Konfigurationsinformation und/oder Parametrierinformation vorteilhafterweise in anderen Anwendungen bzw. für weitere Zwecke verwendet werden, ohne auf die Füllstandmessgeräteverwaltung selbst zurückgreifen zu müssen.

Beispielsweise kann durch eine Exportfunktion der Füllstandmessgeräteverwaltung eine auf dem Zentralrechner erzeugte Konfigurationsinformation und/oder Parametrierinformation in Form einer Datei auf einer Festplatte, USB-Speicher oder ähnlichem Speicher abgelegt werden. Beispielsweise kann eine während des Bestellvorgangs über die Füllstandmessgeräteverwaltung erzeugte komplette Konfigurationsinformation und Parametrierinformation als Datei abgespeichert werden und vor Auslieferung des Gerätes an den Kunden auf das betreffende Füllstandmessgerät übertragen werden. Dies kann einen sofortigen Einsatz am Bestimmungsort ohne nochmalige Konfiguration oder Parametrierung erlauben.

Eine Speicherung der im Zentralrechner erzeugten Konfigurationsinformation und Parametrierinformation kann beispielsweise ebenfalls oder zusätzlich am Benutzerrechner zur Verfügung gestellt werden. Die Speichereinheit kann dabei entweder mit dem Zentralrechner oder dem Benutzerrechner verbunden sein und alle Arten von Datenspeichern, wie beispielsweise Festplattenspeicher, temporär verbindbare Speicher, wie USB-Sticks, RAM, oder vergleichbare Medien umfassen.

Gemäß einem Aspekt der Erfindung wird ein Verfahren zur Erzeugung einer vollständigen Konfigurationsinformation und/oder Parametrierinformation eines Füllstandmessgeräts vorgeschlagen. Das Verfahren weist den Schritt des Bereitstellens einer Webapplikation auf einem Zentralrechner auf. Die Webapplikation weist zumindest alle zur Erzeugung einer vollständigen Konfigurationsinformation und/oder Parametrierinformation notwendigen Funktionen einer Füllstandmessgeräteverwaltung auf. Ein weiterer Schritt ist das Übermitteln von Steuerinformationen durch den Zentralrechner an den Benutzerrechner zum Bereitstellen der Benutzerschnittstelle. Weiterhin erfolgt ein Bereitstellen einer betriebssystemunabhängigen Benutzerschnittstelle auf einem

Benutzerrechner. In einem weiteren Schritt wird eine Datenkommunikationsverbindung zwischen dem Benutzerrechner und dem Zentralrechner hergestellt. In einem weiteren Schritt werden Konfigurationsanweisungen und Parametrieranweisungen erzeugt, die auf Benutzereingaben über die Benutzerschnittstelle auf dem Benutzerrechner basieren. Ein nächster Schritt beinhaltet ein Übermitteln der Konfigurationsanweisungen und Parametrieranweisungen vom Benutzerrechner an den Zentralrechner. Weiterhin weist das Verfahren den Schritt des Erzeugens einer vollständigen Konfigurationsinformation und/oder Parametrierinformation für ein Füllstandmessgerät durch den Zentralrechner auf, wobei das Erzeugen auf den übermittelten Konfigurationsanweisungen und Parametrieranweisungen basiert.

In einer Ausführungsform der Erfindung weist das Verfahren zusätzlich den Schritt des Speicherns der Konfigurationsinformation und/oder Parametrierinformation in einer mit dem Zentralrechner und/oder mit dem Benutzerrechner verbindbaren und zum Speichern von Konfigurationsinformationen und Parametrierinformationen konfigurierten Speichereinheit auf.

In einer Ausführungsform der Erfindung weist das Verfahren zusätzlich den Schritt des Übertragens einer der vom Zentralrechner erzeugten und/oder in der Speichereinheit gespeicherten Konfigurationsinformation und/oder Parametrierinformation in ein Füllstandmessgerät auf. Mit anderen Worten werden die erzeugten Parametrierinformationen und Konfigurationsinformationen beispielsweise als Konfigurationsdatei mittels geeigneter Datenübertragungsvorrichtungen in die Steuerelektronik des Füllstandmessgeräts übertragen. In einem Beispiel wird über eine Kabelverbindung die Konfigurationsdatei in einen Flashspeicher des Füllstandmessgeräts übertragen. Ein Vorteil kann darin gesehen werden, dass hierdurch bereits in einem nicht eingebauten Zustand, beispielsweise vor Auslieferung eines Füllstandmessgeräts an einen Kunden, bereits die finale Konfiguration und Parametrierung erfolgt und keine weitere Konfiguration oder Parametrierung am Einbauort notwendig sein kann.

In einer Ausführungsform der Erfindung erfolgt das Bereitstellen der betriebssystemunabhängigen Benutzerschnittstelle auf dem Benutzerrechner aus einer Rahmenapplikation heraus. In einem Beispiel ist die Rahmenapplikation eine Bestellsoftware oder eine Bestellanwendung, in der ein Kunde oder ein Mitarbeiter ein Füllstandmessgerät definiert, konfiguriert und parametrisiert. Hierbei kann das Aufrufen, beispielsweise eines Device Type Managers, aus der Bestellanwendung beispielsweise über das Betätigen einer Schaltfläche auf der grafischen Benutzeroberfläche erfolgen.

In einer Ausführungsform der Erfindung weist das Speichern der Konfigurationsinformation und/oder Parametrierinformation ein Bereitstellen der erzeugten Konfigurationsinformation und/oder Parametrierinformation für die Rahmenapplikation auf. Mit anderen Worten können die erzeugten Konfigurationsinformationen und/oder Parametrierinformationen in der Rahmenapplikation, beispielsweise einer Bestellanwendung, weiter verarbeitet werden. In einem weiteren Beispiel kann eine erzeugte Konfigurationsinformations- und/oder Parametrierinformationsdatei zusammen mit einem Bestellauftrag, der in der Bestellapplikation erzeugt wurde, abgespeichert werden.

Gemäß einem Aspekt der Erfindung wird weiterhin ein Programmelement zum Erzeugen einer Konfigurationsinformation und/oder Parametrierinformation für ein Füllstandmessgerät vorgeschlagen, das bei Ausführen durch einen Prozessor die Schritte des oben beschriebenen Verfahrens ausführt.

In einem weiteren Aspekt der Erfindung wird ein computerlesbares Medium vorgeschlagen, auf dem ein oben beschriebenes Programmelement gespeichert ist. Kurze Beschreibung der Figuren
Fig. 1 zeigt ein Füllstandmessgeräteparametriersystem zur Konfiguration und/oder Parametrierung eines Füllstandmessgeräts gemäß einem Ausführungsbeispiel der Erfindung in schematischer Darstellung.
Fig. 2 zeigt ein Beispiel eines Verfahrens zur Erzeugung einer vollständigen Konfigurationsinformation und/oder Parametrierinformation eines Füllstandmessgeräts gemäß einem Ausführungsbeispiel der Erfindung.
Fig. 3 zeigt ein Beispiel eines funktionalen vereinfachten Aufbaus eines Füllstandmessgeräteparametriersystems gemäß einem Ausführungsbeispiel der Erfindung.
Fig. 4 zeigt ein Beispiel eines Bestellvorgangs unter Verwendung eines Füllstandmessgeräteparametriersystems gemäß einem Ausführungsbeispiel der Erfindung in vereinfachter Darstellung.

### Detaillierte Beschreibung der Figuren

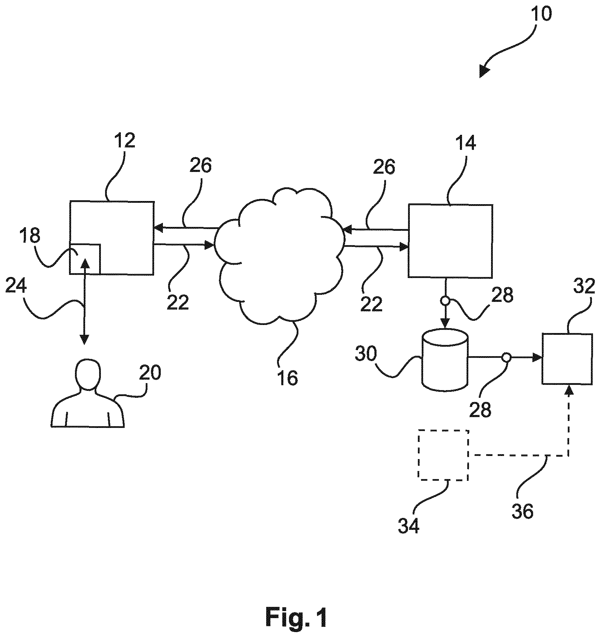

In Fig. 1 ist in vereinfachter schematischer Darstellung ein Füllstandmessgeräteparametriersystem 10 gezeigt, das einen Benutzerrechner 12 und einen Zentralrechner 14 aufweist. Zwischen dem Benutzerrechner 12 und dem Zentralrechner 14 besteht eine Datenkommunikationsverbindung, wobei im hier gezeigten Beispiel diese Datenkommunikationsverbindung über ein IP-basiertes Datennetz 16 hergestellt wird. Hierzu sind sowohl der Benutzerrechner 12 als auch der Zentralrechner 14 beispielsweise über eine Kabelverbindung mit dem Datennetz 16 verbunden. Der Benutzerrechner 12 weist eine Benutzerschnittstelle 18 auf, über die ein Benutzer 20 über Benutzereingaben 24 Konfigurationsanweisungen und Parametrieranweisungen 22 mithilfe des Benutzerrechners 12 erzeugt. Diese Konfigurations- und Parametrieranweisungen 22 werden über das Datennetz 16 an den Zentralrechner 14 übermittelt. Der Zentralrechner 14 ist konfiguriert, dem Benutzerrechner 12 Steuerinformationen 26 zum Bereitstellen der Benutzerschnittstelle 18 zu übermitteln. Diese Steuerinformationen 26 können beispielsweise Anzeigeinformationen zum Erzeugen einer Webseite in einem Browserfenster der Benutzerschnittstelle 18 sein. Die Steuerinformationen 26 können hierbei beispielsweise auf HTML-, Java-, XML- oder ähnlichen Informationen basieren. Die für die Bereitstellung der Benutzerschnittstelle 18 notwendigen intelligenten Funktionen sind dabei im Wesentlichen im Zentralrechner 14 implementiert. Dies kann vorteilhafterweise eine notwendige Hardware am Benutzerrechner 12 bzw. der Benutzerschnittstelle 18 reduzieren. Mit anderen Worten kann der Benutzerrechner 12 mit der Benutzerschnittstelle 18 nur die notwendigen Funktionalitäten bereitstellen, um sowohl Installations- und Wartungsaufwand als auch Kosen niedrig zu halten.

Der Zentralrechner 14 ist konfiguriert, basierend auf den Konfigurations- und Parametrieranweisungen 22 zumindest einen Teil einer Konfigurationsinformation und/oder Parametrierinformation 28 zu erzeugen. Diese Konfigurationsinformation und/oder Parametrierinformation 28 kann in einer Speichereinheit 30 gespeichert werden. Diese Speichereinheit 30 kann beispielsweise einen Festplattenspeicher, einen Wechseldatenträger, RAM oder ähnliche Speicher aufweisen. Ein Vorteil der Speicherung der Konfigurationsinformation und/oder Parametrierinformation 28 in einer Speichereinheit 30 kann darin gesehen werden, dass diese Information für weitere Verfahrensschritte oder Anwendungen über einen längeren Zeitraum zur Verfügung stehen kann.
Die Konfigurationsinformation und/oder Parametrierinformation 28 kann aus der Speichereinheit 30 gelesen und beispielsweise mittels einer Parametriervorrichtung (nicht gezeigt) in das Füllstandmessgerät 32 übertragen werden.

Ergänzend ist eine Füllstandmessgeräteverwaltung 34 dargestellt, die über eine Parametrierverbindung 36 mit dem Füllstandmessgerät 32 verbunden ist. Die Füllstandmessgeräteverwaltung 34 kann beispielsweise ein Device Type Manager (DTM) sein, mit dem das Füllstandmessgerät 32 parametrisiert werden kann. Die gestrichelte Darstellung der Füllstandmessgeräteverwaltung 34 und der Parametrierverbindung 36 soll verdeutlichen, dass es sich hier um eine alternative Variante einer Konfiguration bzw. Parametrierung des Füllstandmessgeräts 32 handelt. Die Benutzerschnittstelle 18 des Benutzerrechners 12 ist hierbei so ausgestaltet, dass sie im Wesentlichen der Ausgestaltung einer Benutzerschnittstelle der Füllstandmessgeräteverwaltung 34 entspricht. Mit anderen Worten wird dem Benutzer 20 an der Benutzerschnittstelle 18 eine im Wesentlichen gleiche grafische Benutzeroberfläche und vergleichbare Eingabemöglichkeiten und Interaktionsmöglichkeiten geboten, wie sie auch in der Füllstandmessgeräteverwaltung 34 implementiert sind. Dies kann vorteilhafterweise eine Effektivität der Bedienung der Benutzerschnittstelle 18 durch den Benutzer 20 verbessern.

Die Benutzerschnittstelle 18 am Benutzerrechner 12 ist durch eine entsprechende Konfiguration des Benutzerrechners 12 und des Zentralrechners 14 betriebsunabhängig bereitgestellt. Dies kann beispielsweise durch Verwendung eines bereits vorinstallierten Webbrowsers auf dem Benutzerrechner 12 und Nutzung von Webapplikationen auf dem Zentralrechner 14 verwirklicht werden.

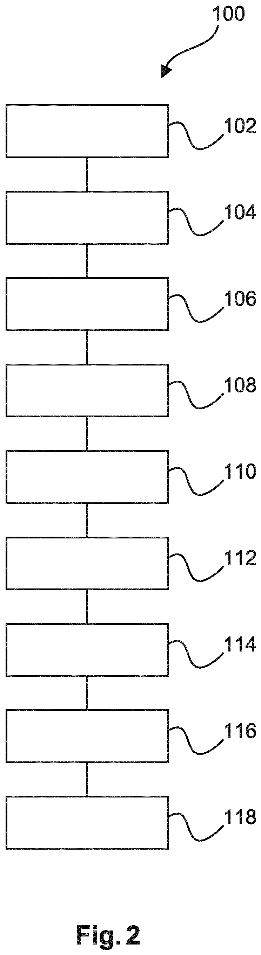

In Fig. 2 ist vereinfacht ein Verfahren 100 zur Erzeugung einer vollständigen Konfigurationsinformation und/oder Parametrierinformation 28 dargestellt. Hierbei wird in einem ersten Schritt 102 eine Webapplikation auf einem Zentralrechner bereitgestellt. Die Webapplikation weist zumindest alle zur Erzeugung einer vollständigen Konfigurationsinformation und/oder Parametrierinformation notwendigen Funktionen einer Füllstandmessgeräteverwaltung auf. In einem weiteren Schritt 104 erfolgt ein Übermitteln von Steuerinformationen durch den Zentralrechner an den Benutzerrechner zum Bereitstellen der Benutzerschnittstelle. In einem weiteren Schritt 106 wird eine betriebssystemunabhängige Benutzerschnittstelle auf einem Benutzerrechner bereitgestellt. Ein weiterer Schritt 108 beinhaltet ein Herstellen einer Datenkommunikationsverbindung zwischen dem Benutzerrechner und dem Zentralrechner. Danach erfolgt in einem Schritt 110 ein Erzeugen von Konfigurationsanweisungen und Parametrieranweisungen basierend auf Benutzereingaben über die Benutzerschnittstelle auf dem Benutzerrechner. Im Schritt 112 werden die Konfigurationsanweisungen und Parametrieranweisungen vom Benutzerrechner an den Zentralrechner übermittelt. Im Schritt 114 wird eine vollständige Konfigurationsinformation und/oder Parametrierinformation für ein Füllstandmessgerät durch den Zentralrechner erzeugt, die auf den übermittelten Konfigurationsanweisungen und Parametrieranweisungen basieren. In einem weiteren Schritt 116 wird die Konfigurationsinformation und/oder Parametrierinformation in einer Speichereinheit gespeichert, wobei die Speichereinheit konfiguriert ist, mit dem Zentralrechner und/oder mit dem Benutzerrechner verbindbar zu sein und weiterhin konfiguriert ist, Konfigurationsinformationen und Parametrierinformationen zu speichern. Ein im gezeigten beispielhaften Verfahren 100 gezeigter weiterer Schritt 118 beinhaltet ein Übertragen der vom Zentralrechner erzeugten und/oder in der Speichereinheit gespeicherten Konfigurationsinformation und/oder Parametrierinformation in ein Füllstandmessgerät.

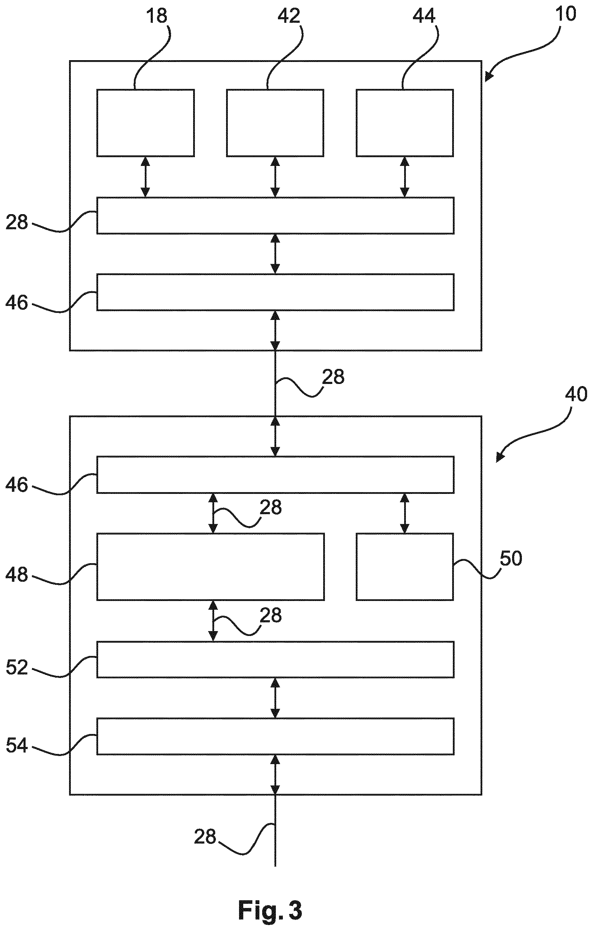

In Fig. 3 ist ein vereinfachtes Beispiel eines Teilbereichs eines Füllstandmessgeräteparametriersystems 10 dargestellt, das mit einer Rahmenapplikation 40 zusammenwirkt. Das Füllstandmessgeräteparametriersystem 10 weist hierbei eine Benutzerschnittstelle 18 auf, die über einen Benutzerrechner und einen Zentralrechner Konfigurationsinformation und/oder Parametrierinformation erzeugt (siehe Beispiel in Fig. 1).
Zusätzlich ist eine Exportfunktionalität 42 und eine Importfunktionalität 44 vorgesehen, die durch Einlesen bzw. Abspeichern von Konfigurationsinformation und/oder Parametrierinformation 28 eine zusätzliche Möglichkeit des Datenaustauschs bereitstellen. Die erzeugte Konfigurationsinformation und/oder Parametrierinformation 28 wird über eine Rahmenapplikationsschnittstelle 46 der Rahmenapplikation 40 zur Verfügung gestellt. Dieser Austausch von Informationen kann beispielsweise softwaremäßig auf dem Benutzerrechner 12 oder im Zentralrechner 14 (siehe Fig. 1) erfolgen. Die Rahmenapplikation 40 wandelt nach Austausch der Konfigurationsinformation und/oder Parametrierinformation 28 über eine Rahmenapplikationsschnittstelle 46 in der Rahmenapplikation 40 die Daten mithilfe eines Informationswandlers 48 in ein spezifisches Format der Rahmenapplikation 40 um. Weiterhin ist die Rahmenapplikation 40 ausgeführt, zumindest einen Teil des Füllstandmessgeräteparametriersystems 10 über ein Startmodul 50 zu starten. Dies kann beispielsweise durch einen Button auf der grafischen Bedienoberfläche der Rahmenapplikation 40 geschehen. Die durch den Informationswandler 48 bereitgestellten Konfigurationsinformationen und/oder Parametrierinformationen 28 werden in einem Speicher 52 in der Rahmenapplikation 40 abgelegt. Hierdurch können die so bereitgestellten Daten und Informationen für die Geräteeinstellungen im spezifischen Format der Rahmenapplikation 40 gespeichert bzw. geladen werden. Die Rahmenapplikation 40 kann weiterhin eine Import/Export-Funktionalität zur Speicherung und zum Laden spezifischer Geräteeinstellungen auf der Ebene der Rahmenapplikation 40 aufweisen.

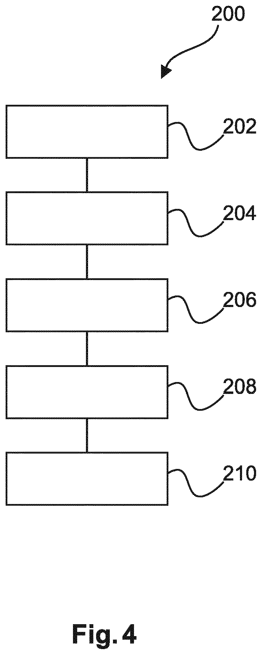

In Fig. 4 wird beispielhaft ein Verfahren 200 zur Bestellung eines Füllstandmessgeräts unter Verwendung eines erfindungsgemäßen Füllstandmessgeräteparametriersystems 10 vereinfacht dargestellt. In einem ersten Schritt 202 wird eine Auftragsdatenbank mit Konfigurationsinformationen und Parametrierinformationen bereitgestellt. In einem zweiten Schritt 204 werden die Konfigurationsinformationen und/oder Parametrierinformationen aus der Auftragsdatenbank gelesen. Dies kann beispielsweise das Laden einer Konfigurationsdatei sein. In einem weiteren Schritt 206 wird die Konfigurationsinformation und/oder Parametrierinformation in ein Füllstandmessgerät übertragen. In Schritt 208 erfolgt ein Transportieren des Füllstandmessgeräts an den Einsatzort. Abschließend wird in einem Schritt 210 das Füllstandmessgerät an seinem letztendlichen Einsatzort eingebaut bzw. in Betrieb genommen.

Der Vorteil dieses Verfahrens kann darin gesehen werden, dass insbesondere in Schritt 210 beim Einbauen bzw. bei der Inbetriebnahme des Füllstandmessgeräts keine nochmalige oder zusätzliche Konfigurierung oder Parametrierung notwendig ist, was einen zeitlichen Aufwand sowie Kosten senken kann.

Ergänzend sei daraufhingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessgeräteparametriersystem (10) zur Anordnung von Baugruppen eines Füllstandmessgeräts (32) und Parametrierung des Füllstandmessgeräts (32) beim Bestellvorgang des Füllstandmessgeräts, aufweisend
einen Benutzerrechner (12) mit einer Benutzerschnittstelle; und
einen Zentralrechner (14);
wobei zwischen dem Zentralrechner (14) und dem Benutzerrechner (14) eine Datenkommunikationsverbindung besteht;
wobei der Benutzerrechner (12) konfiguriert ist, auf Basis von Benutzereingaben (26) über die Benutzerschnittstelle (18) Konfigurationsanweisungen und Parametrieranweisungen (22) zu erzeugen und an den Zentralrechner (14) zu übermitteln;
wobei der Zentralrechner (14) konfiguriert ist, dem Benutzerrechner (12) Steuerinformationen (26) zum Bereitstellen der Benutzerschnittstelle (18) zu übermitteln und basierend auf den Konfigurationsanweisungen und Parametrieranweisungen (22) zumindest einen Teil einer Konfigurationsinformation und/oder Parametrierinformation (28) für ein Füllstandmessgerät (32) zu erzeugen.

2. Das Füllstandmessgeräteparametriersystem (10) gemäß Anspruch 1, wobei der Zentralrechner (14) konfiguriert ist, basierend auf den Konfigurationsanweisungen und Parametrieranweisungen (22) eine vollständige Konfigurationsinformation und/oder Parametrierinformation (28) des Füllstandmessgerätes (32) zu erzeugen.

3. Das Füllstandmessgeräteparametriersystem (10) gemäß einem der vorhergehenden Ansprüche, wobei der Zentralrechner (14) und der Benutzerrechner (12) weiterhin konfiguriert sind, die Konfigurationsinformation und/oder Parametrierinformation (28) mithilfe von Funktionalitäten einer Füllstandmessgeräteverwaltung (34) zu erzeugen.

4. Das Füllstandmessgeräteparametriersystem (10) gemäß einem der vorhergehenden Ansprüche, wobei die Benutzerschnittstelle (18) des Benutzerrechners (12) ausgestaltet ist, einem Benutzer alle zur Erzeugung der vollständigen Konfigurationsinformation und/oder Parametrierinformation (28) notwendigen Funktionen der Füllstandmessgeräteverwaltung (34) zur Verfügung zu stellen.

5. Das Füllstandmessgeräteparametriersystem (10) gemäß einem der vorhergehenden Ansprüche, wobei die Ausgestaltung der Benutzerschnittstelle (18) des Benutzerrechners (12) im Wesentlichen der Ausgestaltung einer Benutzerschnittstelle der Füllstandmessgeräteverwaltung (34) entspricht.

6. Das Füllstandmessgeräteparametriersystem (10) gemäß einem der vorhergehenden Ansprüche, wobei der Benutzerrechner (12) und der Zentralrechner (14) konfiguriert sind, die Benutzerschnittstelle (18) am Benutzerrechner (12) betriebssystemunabhängig bereitzustellen.

7. Das Füllstandmessgeräteparametriersystem (10) gemäß einem der vorhergehenden Ansprüche, wobei das Füllstandmessgeräteparametriersystem (10) auf dem Benutzerrechner (12) und auf dem Zentralrechner (14) als Webapplikation ausgeführt ist.

8. Das Füllstandmessgeräteparametriersystem (10) gemäß einem der vorhergehenden Ansprüche, weiterhin aufweisend
eine Speichereinheit (30), die konfiguriert ist, eine vom Zentralrechner (14) erzeugte Konfigurationsinformation und/oder Parametrierinformation (28) zu speichern.

9. Verfahren (100) zur Erzeugung einer vollständigen Konfigurationsinformation und/oder Parametrierinformation (28) zum Bestellen eines Füllstandmessgerätes (32), aufweisend die Schritte:
- Bereitstellen (102) einer Webapplikation auf einem Zentralrechner;
wobei die Webapplikation zumindest alle zur Erzeugung einer vollständigen Konfigurationsinformation und/oder Parametrierinformation notwendigen Funktionen einer Füllstandmessgeräteverwaltung aufweist;
- Übermitteln (104) von Steuerinformationen durch den Zentralrechner an den Benutzerrechner zum Bereitstellen der Benutzerschnittstelle;
- Bereitstellen (106) einer betriebssystemunabhängigen Benutzerschnittstelle auf einem Benutzerrechner;
- Herstellen (108) einer Datenkommunikationsverbindung zwischen dem Benutzerrechner und dem Zentralrechner;
- Erzeugen (110) von Konfigurationsanweisungen und Parametrieranweisungen basierend auf Benutzereingaben über die Benutzerschnittstelle auf dem Benutzerrechner;
- Übermitteln (112) der Konfigurationsanweisungen und Parametrieranweisungen vom Benutzerrechner an den Zentralrechner;
- Erzeugen (114) einer vollständige Konfigurationsinformation und/oder Parametrierinformation zum Assemblieren und Parametrieren eines Füllstandmessgerätes durch den Zentralrechner basierend auf den übermittelten Konfigurationsanweisungen und Parametrieranweisungen;

10. Das Verfahren (100) gemäß Anspruch 9, zusätzlich aufweisend den Schritt des
- Speicherns (116) der Konfigurationsinformation und/oder Parametrierinformation in einer mit dem Zentralrechner und/oder mit dem Benutzerrechner verbindbaren und zum Speichern von Konfigurationsinformationen und Parametrierinformationen konfigurierten Speichereinheit.

11. Das Verfahren (100) gemäß Anspruch 10, zusätzlich aufweisend den Schritt des
- Übertragens (118) einer der vom Zentralrechner erzeugten und/oder in der Speichereinheit gespeicherten Konfigurationsinformation und/oder Parametrierinformation in ein Füllstandmessgerät.

12. Das Verfahren (100) gemäß einem der Ansprüche 9 bis 11, wobei das Bereitstellen der betriebssystemunabhängigen Benutzerschnittstelle auf dem Benutzerrechner aus einer Rahmenapplikation heraus erfolgt.

13. Das Verfahren (100) gemäß einem der Ansprüche 10 bis 12, wobei das Speichern der Konfigurationsinformation und/oder Parametrierinformation ein Bereitstellen der erzeugten Konfigurationsinformation und/oder Parametrierinformation für die Rahmenapplikation aufweist.

14. Programmelement zum Erzeugen einer Konfigurationsinformation und/oder Parametrierinformation (28) für ein Füllstandmessgerät (32), das bei Ausführen durch einen Prozessor die Schritte des Verfahrens (100) gemäß Anspruch 9 bis 13 ausführt.

15. Computerlesbares Medium, auf dem ein Programmelement gemäß Anspruch 14 gespeichert ist.

## Claims

1. A level measurement device parameterisation system (10) for arranging hardware components of a level measurement device and parameterising the level measurement device (32) during an ordering process of the level measurement device, comprising
a user computer (12) having a user interface; and
a central computer (14);
wherein there is a data communications link between the central computer (14) and the user computer (12);
wherein the user computer (12) is configured to generate, on the basis of user inputs (24) via the user interface (18), configuration instructions and parameterisation instructions (22) and to transmit them to the central computer (14);
wherein the central computer (14) is configured to transmit control information (26) to the user computer (12) for providing the user interface (18), and to generate at least part of configuration information and/or parameterisation information (28) for a level measurement device (32) based on the configuration instructions and parameterisation instructions (22).

2. The level measurement device parameterisation system (10) according to claim 1, wherein the central computer (14) is configured to generate, based on the configuration instructions and parameterisation instructions (22), a complete configuration information and/or parameterisation information (28) for the level measurement device (32).

3. The level measurement device parameterisation system (10) according to any of the preceding claims, wherein the central computer (14) and the user computer (12) are further configured to generate the configuration information and/or parameterisation information (28) by way of functionalities of a level measurement device manager (34).

4. The level measurement device parameterisation system (10) according to any of the preceding claims, wherein the user interface (18) of the user computer (12) is configured to provide a user with all necessary functions of the level measurement device manager (34) for generating a complete configuration information and/or parameterisation information (28).

5. The level measurement device parameterisation system (10) according to any of the preceding claims, wherein the configuration of the user interface (18) of the user computer (12) substantially corresponds to the configuration of a user interface of the level measurement device manager (34).

6. The level measurement device parameterisation system (10) according to any of the preceding claims, wherein the user computer (12) and the central computer (14) are configured to provide the user interface (18) on the user computer (12) independently of the operating system.

7. The level measurement device parameterisation system (10) according to any of the preceding claims, wherein the level measurement device parameterisation system (10) is configured as a Web application on the user computer (12) and on the central computer (14).

8. The level measurement device parameterisation system (10) according to any of the preceding claims, further comprising
a storage unit (30), which is configured to store a configuration information and/or parameterisation information (28) generated by the central computer (14).

9. A method (100) for generating a complete configuration information and/or parameterisation information (28) for ordering a level measurement device (32), comprising the steps of:
- providing (102) a Web application on a central computer;
- wherein the Web application comprises at least all functions of a level measurement device manager which are required for generating the complete configuration information and/or parameterisation information;
- transmitting (104) control information by the central computer to a user computer to provide a user interface;
- providing (106) an operating-system-independent user interface on the user computer;
- establishing (108) a data communication link between the user computer and the central computer;
- generating (110) configuration instructions and parameterisation instructions based on user inputs via the user interface on the user computer;
- transmitting (112) the configuration instructions and parameterisation instructions from the user computer to the central computer; and
- generating (114), by the central computer, a complete configuration information and/or parameterisation information for assembling and parameterizing a level measurement device based on the transmitted configuration instructions and parameterisation instructions.

10. The method (100) according to claim 9, further comprising the step of
- storing (116) the configuration information and/or parameterisation information in a storage unit, which is connectable to the central computer and/or to the user computer and which is configured to store configuration information and parameterisation information.

11. The method (100) according to claim 10, additionally comprising the step of
- transmitting (118) the configuration information and/or parameterisation information generated by the central computer and/or stored in the storage unit to the level measurement device.

12. The method (100) according to any of claims 9 to 11, wherein the operating-system-independent user interface is provided on the user computer from a framework application.

13. The method (100) according to any of claims 10 to 12, wherein storing the configuration information and/or parameterisation information comprises providing the generated configuration information and/or parameterisation information for the framework application.

14. Program element for generating configuration information and/or parameterisation information (28) for a level measurement device (32), which, when executed by a processor, carries out the steps of the method (100) according to claims 9 to 13.

15. Computer-readable medium on which a program element according to claim 14 is stored.

## Revendications

1. Système de paramétrage d'appareil de mesure du niveau de remplissage (10) destiné à l'agencement de modules d'un appareil de mesure du niveau de remplissage (32) et paramétrage de l'appareil de mesure du niveau de remplissage (32) lors d'un processus de commande de l'appareil de mesure du niveau de remplissage, comprenant :
un ordinateur pour l'utilisateur (12) avec une interface utilisateur ; et
un ordinateur centralisé (14) ;
dans lequel une connexion de communication de données existe entre l'ordinateur centralisé (14) et l'ordinateur de l'utilisateur (12) ;
dans lequel l'ordinateur de l'utilisateur (12) est configuré pour produire, sur la base d'entrées utilisateur (26) par le biais de l'interface utilisateur (18), des instructions de configuration et des instructions de paramétrage (22) et les transmettre à l'ordinateur centralisé (14) ;
dans lequel l'ordinateur centralisé (14) est configuré pour transmettre à l'ordinateur de l'utilisateur (12) des informations de pilotage (26) pour fourniture de l'interface utilisateur (18) et produire au moins une partie d'une information de configuration et/ou d'une information de paramétrage (28) pour un appareil de mesure du niveau de remplissage (32), en se basant sur les instructions de configuration et les instructions de paramétrage (22).

2. Système de paramétrage d'appareil de mesure du niveau de remplissage (10) selon la revendication 1, dans lequel l' ordinateur centralisé (14) est configuré pour produire une information de configuration et/ou une information de paramétrage (28) complète pour un appareil de mesure du niveau de remplissage (32) en se basant sur les instructions de configuration et les instructions de paramétrage (22).

3. Système de paramétrage d'appareil de mesure du niveau de remplissage (10) selon l'une des revendications précédentes, dans lequel l'ordinateur centralisé (14) et l'ordinateur de l'utilisateur (12) sont de plus configurés pour produire l'information de configuration et/ou l'information de paramétrage (28) à l'aide de fonctionnalités d'un gestionnaire d'appareil de mesure du niveau de remplissage (34) .

4. Système de paramétrage d'appareil de mesure du niveau de remplissage (10) selon l'une des revendications précédentes, dans lequel l'interface utilisateur (18) de l'ordinateur de l'utilisateur (12) est conçue pour mettre à disposition d'un utilisateur toutes les fonctions du gestionnaire d'appareil de mesure du niveau de remplissage (34) nécessaires à la production de l'information de configuration et/ou de l'information de paramétrage (28) complète.

5. Système de paramétrage d'appareil de mesure du niveau de remplissage (10) selon l'une des revendications précédentes, dans lequel la conception de l'interface utilisateur (18) de l'ordinateur de l'utilisateur (12) correspond essentiellement à la conception d'une interface utilisateur (18) du gestionnaire d'appareil de mesure du niveau de remplissage (34).

6. Système de paramétrage d'appareil de mesure du niveau de remplissage (10) selon l'une des revendications précédentes, dans lequel l'ordinateur de l'utilisateur (12) et l'ordinateur centralisé (14) sont configurés pour fournir l'interface utilisateur (18) sur l'ordinateur de l'utilisateur (12) indépendamment du système d'exploitation.

7. Système de paramétrage d'appareil de mesure du niveau de remplissage (10) selon l'une des revendications précédentes, dans lequel le système de paramétrage d'appareil de mesure du niveau de remplissage (10) est mis en œuvre sur l'ordinateur de l'utilisateur (12) et sur l'ordinateur centralisé (14) comme application Web.

8. Système de paramétrage d'appareil de mesure du niveau de remplissage (10) selon l'une des revendications précédentes, comportant en outre :
une unité de mémoire (30), laquelle est configurée pour enregistrer une information de configuration et/ou une information de paramétrage (28) produite par l'ordinateur centralisé (14).

9. Procédé (100) de production d'une information de configuration et/ou d'une information de paramétrage (28) complète pour la commande d'un appareil de mesure du niveau de remplissage (32), comprenant les étapes de :
- fourniture (102) d'une application Web sur un ordinateur centralisé ; dans lequel l'application Web comporte au moins toutes les fonctions d'un gestionnaire d'appareil de mesure du niveau de remplissage nécessaires à la production d'une information de configuration et/ou d'une information de paramétrage complète ;
- transmission (104) d'informations de pilotage par l'ordinateur centralisé à l'ordinateur de l'utilisateur pour la fourniture de l'interface utilisateur ;
- fourniture (106) d'une interface utilisateur indépendante du système d'exploitation sur l'ordinateur de l'utilisateur ;
- établissement (108) d'une connexion de communication de données entre l'ordinateur de l'utilisateur et l'ordinateur centralisé ;
- production (110) d'instructions de configuration et d'instructions de paramétrage en se basant sur des entrées utilisateur sur l'ordinateur de l'utilisateur par le biais de l'interface utilisateur ;
- transmission (112) des instructions de configuration et des instructions de paramétrage de l'ordinateur de l'utilisateur à l'ordinateur centralisé ;
- production (114) d'une information de configuration et/ou d'une information de paramétrage complète pour l'assemblage et le paramétrage d'un appareil de mesure du niveau de remplissage par l'ordinateur centralisé en se basant sur les instructions de configuration et les instructions de paramétrage transmises.

10. Procédé (100) selon la revendication 9, comprenant en outre l'étape de
- enregistrement (116) de l'information de configuration et/ou de l'information de paramétrage dans une unité de mémoire connectable à l'ordinateur centralisé et/ou à l'ordinateur de l'utilisateur et configurée pour enregistrer des informations de configuration et des informations de paramétrage.

11. Procédé (100) selon la revendication 10, comprenant en outre l'étape de
- transfert (118) dans un appareil de mesure du niveau de remplissage d'une des informations de configuration et/ou informations de paramétrage produites par l'ordinateur centralisé et/ou enregistrées dans l'unité de mémoire.

12. Procédé (100) selon l'une des revendications 9 à 11, dans lequel la fourniture de l'interface utilisateur indépendante du système d'exploitation sur l'ordinateur de l'utilisateur s'effectue à partir d'une application cadre.

13. Procédé (100) selon l'une des revendications 10 à 12, dans lequel l'enregistrement de l'information de configuration et/ou de l'information de paramétrage comporte une fourniture de l'information de configuration et/ou de l'information de paramétrage pour l'application cadre.

14. Élément de programme pour la production d'une information de configuration et/ou d'une information de paramétrage (28) pour un appareil de mesure du niveau de remplissage (32), lequel met en œuvre par un processeur les étapes du procédé (100) selon la revendication 9 à 13 lors de la mise en œuvre.

15. Support lisible par ordinateur sur lequel est enregistré un élément de programme selon la revendication 14.
